# FASCICULE DE BREVET EUROPEEN

(11) **EP 0 904 297 B1**
(45) Date de publication et mention de la délivrance du brevet: **30.06.2004**
(21) Numéro de dépôt: 98917284.6
(22) Date de dépôt: 01.04.1998
(51) Int. Cl.: C08B 31/00, B24C 11/00

(54) **PRODUITS BIOLOGIQUES RETICULES, LEUR PROCEDE D'OBTENTION ET LEUR APPLICATION COMME PRODUITS DE DECAPAGE**
VERNETZTE BIOLOGISCHE PRODUKTE, VERFAHREN ZU IHRER HERSTELLUNG UND DEREN VERWENDUNG ALS SCHEUERMITTEL
CROSSLINKED BIOLOGICAL PRODUCTS, PROCESS FOR OBTAINING SUCH PRODUCTS, AND THEIR USE AS REMOVERS

(30) Priorité: 01.04.1997 FR 9703931
(43) Date de publication de la demande: 31.03.1999
(73) Titulaire: Syndicat Interprofessionnel Biodecap, 78153 Le Chesnay (FR)
(72) Inventeur: BONHOURE, Jean-Paul, 95390 Saint-Prix (FR); THERY, Denis, 95430 Auvers-sur-Oise (FR); DOUMEIZEL, Jacques, 78550 Houdan (FR)
(74) Mandataire: Burtin, Jean-François
(86) Numéro de dépôt international: PCT/FR1998/000658
(87) Numéro de publication internationale: WO 1998/044004

(56) Documents cités:
- EP-A- 0 396 226
- CH-A- 269 496
- DE-C- 94 628
- LU-A- 27 993

## Description

La présente invention se rapporte au domaine de la chimie biologique et plus particulièrement à celui des polysaccharides.

Elle a plus précisément pour objet des produits biologiques dérivés de farines de céréales et transformés de façon à obtenir une texture vitreuse et présentant une dureté suffisante pour permettre leur utilisation comme substance abrasive.

La présente invention concerne donc des produits biologiques résultant de la polymérisation et de la réticulation de farines de céréales à l'aide d'un agent réticulant bifonctionnel.

On connaissait déjà par le brevet français n° 2.646.621 la possibilité d'obtenir à partir d'amidons des particules de polysaccharides vitreux. Ces particules présentent une dureté apparente intermédiaire entre celle du revêtement que l'on désire abraser et celle du substrat portant le revêtement. Ainsi l'abrasion est sélective.

Ces particules sont formées d'amidon de blé qui est au préalable recuit pour obtenir un produit solide ayant une teneur en humidité comprise entre 10 et 70 % en poids, mis à réagir notamment avec de l'épichlorhydrine comme agent de réticulation pour former des molécules de polysaccharide ayant des réticulations chimiques entre les molécules polysaccharidiques, et broyé pour que le produit solide en résultant forme des particules granuleuses ayant une taille de particules déterminée et présente une dureté allant jusqu'à 4,0 Moh.

Les granules décrites dans ce brevet sont faites d'amidon ayant une teneur en eau définie, une nature amorphe et contenant peu de dextrose. Le produit n'a donc subi au cours des différents traitements en milieu alcalin qu'une hydrolyse réduite.

On doit constater aussi que l'agent de réticulation utilisé dans ce procédé est un produit chosi en dehors de l'épichlorhydrine, parmi le tripolyphosphate de sodium ou le trimétaphosphate de sodium.

Les essais effectués par la Demanderesse ont montré que l'épichlorhydrine n'est pas un agent réticulant efficace car il n'augmente pas la viscosité du produit décrit dans le brevet 2.646.621.

On constate également que l'amidon de blé doit être soumis à une cuisson prolongée jusqu'à gélification totale puis à une dessiccation complète au four ou à l'extrudeuse, après réticulation. On obtient ainsi une masse qui devient dure, d'aspect vitreux après retour à la température ordinaire.

Le produit biologique objet de la présente demande de brevet se différencie donc de celui décrit antérieurement dans le brevet n° 2.646.621 en ce qu'il dérive non pas d'amidon plus ou moins hydrolysé, mais de farine, en ce que l'agent de réticulation est non pas l'épichlorhydrine mais est choisi parmi les agents de réticulation bifonctionnels choisis dans le groupe formé par les dérivés polyhalogénés, les aldéhydes, les dialdéhydes et les anhydrides d'acide dicarboxylique, et en ce que la dessiccation n'est pas effectuée dans une extrudeuse à différents corps de chauffe mais dans une extrudeuse ou un four assurant un séchage régulier sans phénomène de croûtage ou au contraire sans production de produits se fragmentant trop facilement.

Toutes ces différences amènent la formation d'un produit biologique dont la nature chimique et la constitution physique sont bien distinctes de celles décrites dans les brevets antérieurs. En particulier, alors que la réticulation par l'épichlorhydrine amène la formation de ponts éthers entre les différentes chaînes de molécules de glucose, l'utilisation de dérivés bifonctionnels comme le formol ou l'anhydride maléique, conduit à des réactions chimiques complexes d'une nature différente et ne forme sans doute pas ou peu d'éléments de pontage.

Le brevet français n° 2.250.851 a déjà décrit un revêtement de peinture pour argiles dans lequel la réticulation s'effectue avec un agent de formolation comme la combinaison mélamine-formol. On ne peut pas déterminer dans cette réaction chimique si c'est le formol ou la mélamine qui réagissent avec l'amidon ou si ce sont les deux réactifs qui agissent simultanément. On peut alors se demander quel type de réaction chimique est susceptible de se produire entre les molécules d'anhydroglucose de l'amidon et un tel réactif.

En effet, l'action d'un agent de réticulation peut conduire soit à une action d'éthérification sur les groupes hydroxyméthyle portés en position 6 des maillons glucose, soit à des réactions de réticulation intra-moléculaires entre les différentes chaînes polysaccharidiques linéaires. Le réactif de réticulation utilisé peut favoriser un de ces deux types de réaction ou au contraire ne posséder aucune spécificité. En outre la présence de protéines dans la farine rend la réaction plus complexe encore par suite de réactions de Maillard intra-moléculaires.

La présente invention a aussi pour objet un procédé d'obtention de tels produits biologiques qui consiste à réaliser à froid une dispersion aqueuse de farine de céréales, à former au préalable par cuisson en milieu alcalin un gel élaboré à partir de cette farine, et notamment de farine de blé ou d'épeautre, et en présence d'un agent de réticulation, à lui faire subir une cuisson supplémentaire ayant pour effet d'obtenir par maturation du gel une structure solide présentant un caractère vitreux et à procéder ensuite à un broyage pour former des grains translucides de structure amorphe, durs, légèrement colorés.

### Choix de la farine et apports des protéines

L'élasticité et la compressibilité du gel dépendent de la variété de farine. Par exemple, pour celles de céréales, l'élasticité est forte et la compressibilité faible, alors que pour la pomme de terre c'est l'inverse. Ainsi, l'origine de la farine confère au gel une texture spécifique (élasticité, dégradation) alors que les autres propriétés du gel dépendent de la concentration en amidon et de la température de gélatinisation, ainsi que du rapport farine / protéines / autres constituants.

La présence de protéines facilite le contact entre les granulés et renforce le réseau moléculaire. Ces interactions ne sont possibles qu'avec certaines variétés de farines (comme le blé), qui possèdent des « matériaux adhérents » à la surface des granulés. Les protéines enfermées au coeur du réseau ont un rôle statique donnant au média une certaine structure. L'impact des protéines dans la composition et l'efficacité du produit est important.

Ainsi, selon l'invention, les essais ont montré qu'il convenait de retenir une farine de blé qui confère notamment au média abrasif :
- la possibilité de réaliser, à partir d'une même matière première, plusieurs qualités d'abrasifs, ce qui est impossible avec de l'amidon seul,
- d'obtenir un produit plus résistant dans le temps, tout en étant plus souple, avec un recyclage possible du produit après projection beaucoup plus important qu'avec les produits de référence ayant le même système de projection et dans des conditions d'applications similaires. En conséquence, l'abrasif ainsi obtenu est plus performant et est moins cassant lors de sa projection,
- une efficacité dès la première passe, contrairement aux produits de référence, tout en restant sélectif.

### Choix des réticulants

Dans les mêmes conditions de séchage et de gélification, la nature de l'agent réticulant a une influence significative sur la mesure de la valeur de la dureté. En effet, l'abrasif selon l'invention est plus dur que le produit de référence fourni.

Les réticulants utilisés doivent être bifonctionnels, c'est-à-dire comporter deux groupements fonctionnels riches en électrons (anhydride maléique, anhydride phtalique, glyoxal, aldéhyde glutarique). D'autres réticulants peuvent être utilisés, comme à titre d'exemple :
- POCl₃,
- CH3 CHO,
- formol.

### Caractéristiques du media

| | |
|---|---|
| Granulométrie | 0,120 mm à 1,8 mm |
| MS (Matière sèche) | 0,75 à 0,85 |
| Dureté shore | 70 à 85 |

Les matières premières utilisables sont de préférence la farine de blé qualité boulangerie ou fourragère, ou la farine d'épeautre n'ayant pas subi d'autre traitement que la mouture en farine.

Selon le procédé, la farine va subir cinq étapes de transformation :
- réalisation d'une dispersion de la farine de céréales dans l'eau à température ambiante.
- formation d'un gel par chauffage en milieu aqueux en présence d'un agent alcalin et d'un agent de réticulation jusqu'à obtention d'une masse homogène.
- séchage du gel dans un réacteur en couche mince permettant d'imprimer au mélange un mouvement hélicoïdal autorisant un renouvellement rapide de la surface exposée lors du séchage.
- stabilisation du gel pendant une période suffisante pour assurer l'homogénéité de l'humidité dans le granulé formé (tempérage).
- broyage et tamisage du gel desséché pour former des particules dures de granulométrie déterminée.

Selon un mode particulier de réalisation, l'agent de réticulation est choisi parmi les dérivés dichlorés et notamment l'oxychlorure de phosphore, les aldéhydes comme le formaldéhyde ou l'acétaldéhyde ou l'anhydride maléique.

Selon un autre mode particulier de réalisation selon l'invention, la formolation du gel est effectuée à partir d'une suspension de farine dans de l'eau. La concentration en farine brute peut varier dans de larges proportions et notamment de 15 à 45 % de la masse totale de la suspension. Cette opération peut être conduite dans un réacteur en verre ou en métal chauffé par une enveloppe extérieure et équipé d'un dispositif d'agitation suffisamment puissant.
L'agitation a pour objet de permettre le maintien et l'obtention d'une texture homogène après chauffage sans risque de rupture du gel.

Le réacteur peut en outre être équipé d'un dispositif permettant le séchage du gel « in situ » éventuellement en introduisant une certaine dépression. Le réacteur peut encore être équipé d'un dispositif externe de chauffage complémentaire comme un four à micro-ondes.

Dans le cas où le séchage est effectué à l'extérieur du réacteur, celui-ci sera pourvu en outre d'un dispositif de déchargement du gel, comme une introduction d'air comprimé pour assurer le déchargement sous pression de gels très visqueux de concentrations élevées.

Dans un mode d'exécution particulièrement préféré selon l'invention, la gélification est effectuée dans un réacteur étanche, comme un réacteur de 700 litres, équipé d'une double enveloppe assurant le chauffage, chauffée à la vapeur provenant d'une chaudière de 40 KW. Le dispositif d'agitation est alors un agitateur du type d'une hélice de type ancre, mue par un moteur de 2,3 KW. Le réacteur est pourvu à l'intérieur d'un système de contre-pâles. Le réacteur est connecté à une arrivée d'air comprimé qui permet d'élever la pression dans l'enceinte et favorise le déchargement.

Le procédé selon l'invention comporte donc plus précisément les étapes successives :
- introduction d'eau préalablement tiède sans dépasser 45° C pour ne pas provoquer la formation ultérieure de grumeaux et sous agitation on ajoute :
   ⇒ addition de la farine aux concentrations exposées ci-dessus.
   ⇒ adjonction d'un agent alcalin dilué dans l'eau, comme de la soude à raison de 0,3 à 0,6 g de soude par Kg de farine.
   ⇒ introduction d'un agent réticulant bifonctionnel, à la dose de 0,1 à 0,3 g par Kg de farine pour le formol ou l'anhydride phtalique, à la dose de 0,3 g à 0,6 g par Kg de farine pour l'anhydride maléique.
   ⇒ agitation du mélange à 0,5 Hz et mise en chauffage du réacteur à une température comprise entre 60 et 90° C. Dès que cette température est atteinte, l'agitation est maintenue pendant une phase de réaction qui peut durer de 15 à 30 mn.
   ⇒ addition éventuelle d'un agent biocide pour éviter l'attaque bactérienne ou fongique.
L'agent de réticulation est de préférence le formol. On peut l'utiliser soit sous forme libre en solution aqueuse, soit sous forme combinée comme la combinaison bisulfitique du commerce ou sous forme de formaldehyde sulfoxylate de sodium où sous forme de base de Schiff combinée à l'aniline ou à la méthylamine, ou encore sous forme de polymère comme le métaldehyde ou le trioxanne.
- au terme de la phase de réticulation le réacteur est vidé et la masse de gel est soumise au séchage.
- le séchage est effectué de préférence en étuve par convection naturelle ou forcée ou dans un réacteur permettant simultanément de soumettre le gel à une dépression et à un séchage par micro-ondes. Cet apport d'énergie supplémentaire permet de maintenir au coeur du gel une température suffisante (au moins de 70 à 75°) pour effectuer la transformation du gel en structure vitreuse. L'expérience a montré qu'en fonction d'un apport suffisamment élevé en micro-ondes, on peut obtenir un séchage optimal en un temps aussi court que 4 heures y compris le temps nécessaire à la gélification et surtout on réalise au coeur du gel une température suffisamment élevée permettant d'assurer la vitrification des grains.

Il est possible également d'effectuer le séchage en étuve ou au four à des températures supérieures à 100° C ; le séchage est alors plus rapide mais il existe un risque certain d'observer un phénomène de formation d'enveloppe c'est-à-dire de formation de deux couches sèches enveloppant une couche de gel encore hydraté dont le séchage demeure hasardeux à cause de l'imperméabilité des couches supérieures et inférieures de l'enveloppe.
Le produit selon l'invention se présente habituellement sous la forme d'une phase solide cohérente, présentant une coloration qui peut varier selon le procédé utilisé et surtout selon le mode de séchage employé ainsi qu'en fonction de la matière première utilisée. Un test de dureté Shore réalisé en éprouvettes calibrées, montre une dureté comprise entre 70 et 85. Le produit brut n'est pas utilisé en l'état. Il est soumis à un broyage réalisé par exemple dans un broyeur à couteaux.

L'analyse du produit brut montre un degré de siccité compris entre 75 et 85 % et de préférence de 78 à 82 % de matière sèche. L'activité en eau est comprise en 0,65 et 0,80 ce qui indique une teneur en eau libre relativement importante.

On évite de produire un produit trop desséché c'est-à-dire ayant un degré de siccité supérieur à 85 % comme celui obtenu lors de l'échauffement du broyeur. Un tel produit est trop sec et par suite trop agressif vis-à-vis des matériaux à abraser.

Lorsque le produit est plus hydraté c'est-à-dire lorsque la teneur en matière sèche est notablement inférieure à 78 % le produit brut présente une rigidité insuffisante et est trop élastique. Ceci pose alors des problèmes de broyage.

L'homogénéité de l'humidité et la stabilisation du produit ont une grosse influence sur la dureté et sur la structure du produit fini. Le produit après extrusion a été granulé en pellets. Les pellets doivent subir un tempérage de plusieurs heures (14 heures par exemple pour que l'humidité de la masse s'homogénéise).

Le broyage du produit brut est effectué de préférence dans un broyeur à couteaux. La grille de tamisage est calibrée selon la finesse souhaitée. Une ouverture de mailles de 1 à 2 mm est la plus appropriée. Le produit broyé est ensuite tamisé pour assurer une granulométrie homogène et le seuil de refus le plus approprié se situe entre 0,2 et 0,25 mm.

Le produit biologique selon l'invention se présente après broyage et tamisage sous la forme de grains solides et translucides, ne présentant aucune manifestation de cristallinité à l'examen de diffraction aux rayons X. Il possède d'excellentes caractéristiques de transparence à l'examen microscopique. Tout au plus on n'a pu détecter que quelques traces d'inclusion de sons, voire de protéines dégradées, sous forme de très petites tâches noires, qui peuvent être détectées à l'examen microscopique. La teneur en eau résiduelle est de préférence supérieure à 12 % sans dépasser 20 % et conditionne la dureté du produit.

Un taux d'humidité de 15 % environ peut être obtenu notamment en trois phases de séchage dans l'appareillage OTW-150 à 70-90° C et deux passages de séchage-refroidissement dans l'appareillage DNTW à 90-100° C.

Le produit biologique selon l'invention présente une coloration légèrement brune. On peut de ce fait constater la présence certaine d'une réaction de Maillard. Le produit présente une dureté exprimée en degré Mohs qui est fonction du degré de dessiccation, comprise entre 2 et 4 Mohs et qui est déterminée par la nature de la matière première utilisée et le procédé de séchage employé. D'une manière générale les produits biologiques selon l'invention produits à partir de farines d'épeautre ont une dureté plus élevée (3-4 Mohs) que celle des produits préparés à partir de farine de blé (2-2,3 Mohs après séchage en étuve à convection forcée). Cependant la dureté Mohs est d'une évaluation difficile et ne peut servir à elle seule à définir le caractère abrasif du produit.

Il a été constaté que pour un même produit sorti du séchoir avec tempérage ou sans tempérage, il y avait une différence de qualité du produit fini après broyage. Le produit broyé tout de suite après séchage a un aspect mat poussiéreux tandis que le produit broyé après 14 heures de tempérage est brillant, d'une granulométrie homogène. Ces deux facteurs influencent le débit du broyeur.
Après le broyage, le produit a été tamisé avec le plansichter MPAR en deux fractions : ± > 140 µ et ± < 140 µ (- 10 %).

Le produit biologique selon l'invention présente un toucher caractéristique qui atteste de son caractère abrasif. Le produit final ne présente aucun caractère hygroscopique ni ne manifeste de tendance à l'agglomération par électricité statique, en prenant cependant la précaution d'éliminer les particules les plus fines (< 0,23 mm). Le produit biologique peut éventuellement être additionné d'un produit biocide pour éviter le développement de moisissures ou pour empêcher une dégradation.

Le produit selon l'invention trouve un emploi comme produit abrasif notamment par projection sous pression à l'état sec. Le produit peut être recyclé ou récupéré et servir ainsi jusqu'à six opérations successives sans perdre de ses qualités.

Il peut ainsi être utilisé en aéronautique pour le décapage des carcasses d'avion, pour le retrait des joints en caoutchouc de verrière sous pression élevée, ou des peintures de carlingue sous pression plus faible, avec une excellente sélectivité.

Il peut aussi être utilisé pour le décapage de matériaux composites ou métalliques en permettant l'élimination de laques et de peintures sans détérioration du substrat.

Il peut encore être utilisé pour des opérations de ravalement notamment sur les façades d'immeubles, de monuments historiques ou religieux en respectant le profil des moulures, des sculptures, des inclusions ou des ornementations.

Il peut encore être utilisé pour le décapage des sols comme le ciment, les carreaux de terre cuite ou la réfection des murs (peintures, carrelages, enduits).

Le produit biologique selon l'invention présente l'avantage d'être totalement biodégradable sans laisser de résidu nocif ou gênant. Il peut de ce fait être ultérieurement détruit ou décomposé, en ne laissant que quelques particules indésirables telles que gommes, goudrons, polymères, traces d'éléments métalliques qui subsistent après digestion du produit biologique notamment sous l'influence de produits enzymatiques.

L'utilisation du produit biologique selon l'invention s'avère être d'une grande souplesse qui permet d'opérer sur une plage très étendue d'applications. On peut varier la pression de projection, l'origine de la matière première et le procédé de fabrication sans changer essentiellement les propriétés du produit biologique final.

En outre le produit ainsi obtenu bénéficie d'un coût de production sensiblement plus favorable que celui des produits antérieurement connus qui sont issus notamment d'amidons préalablement purifiés donc sensiblement plus chers.

L'invention concerne encore l'utilisation des produits biologiques selon l'invention en tant que produit de décapage, soit utilisé tel quel, soit en suspension dans un jet d'air comprimé et projeté sous pression sur différents types de substrats.

L'invention se rapporte en particulier à l'utilisation du produit biologique selon l'invention comme agent de décapage des carlingues d'avion ou des tôles de voitures, pour éliminer les restes de peinture sans attaquer la première couche d'apprêt.

L'invention se rapporte encore à l'utilisation du produit biologique selon l'invention comme agent de décapage pour surfaces composites ou métalliques peintes ou émaillées, de meubles ou d'appareils électroménagers.

L'invention se rapporte également à l'utilisation de suspensions du produit biologique selon l'invention, le cas échéant en association avec des produits détergents, pour le nettoyage des façades d'immeubles en particulier celles comportant des sculptures, des moulures, des encastrements présentant un intérêt ornemental ou historique.

L'invention se rapporte encore à l'utilisation du produit biologique selon l'invention comme décapant pour les sols ou pour les parois de murs ou de plafond, comme par exemple des couloirs de circulation ou les souterrains.

A ces fins le produit biologique selon l'invention peut être utilisé soit tel quel en pulvérisation soit en mélange à une concentration allant de 10 à 50 % dans un gaz propulseur comme l'air comprimé pendant une durée allant de 1 à 10 heures jusqu'à obtention d'une surface ne présentant plus de traces du revêtement antérieur ou des salissures recouvrant la surface du bâtiment rénové.

Le produit biologique selon l'invention trouve encore une utilisation pour l'abrasion cutanée. On réalise par projection sous pression un balayage de la peau qui provoque une élimination des cellules cutanées et réalise l'opération de nettoyage appelée peeling.

Compte tenu de la structure du produit, il est possible de le broyer et de le tamiser à une granulométrie de l'ordre de 100 à 200 µ sans altérer son efficacité. Les applications en dermabrasion sont plus douces tout en étant plus efficaces.

Le produit avant conditionnement peut faire l'objet d'une stérilisation à sec sans effet sur l'efficacité du produit.

### EXEMPLE I

Préparation du produit biologique par réaction de la farine de blé avec le formaldéhyde.

On dispose d'un réacteur en acier inoxydable à double enveloppe chauffé à la vapeur et muni d'un circuit de refroidissement.

On remplit le réacteur avec de l'eau distillée présentant une température inférieure à 45° C. On pèse la farine de blé et les additifs. éventuels. On met en route l'agitation à une vitesse de l'ordre de 50 t/min et on ajoute dans l'ordre la farine déjà pesée, la soude préalablement dissoute dans 50 ml d'eau distillée puis une solution commerciale de formaldéhyde et 0,25 g d'azoture de sodium.

La vitesse d'agitation est ensuite réglée à 30 t/min environ. On met alors en chauffe (consigne de la vanne à 80° C, consigne de la chaudière à 150° C).

Lorsque la température atteint 80° C on laisse maturer le gel à cette température 15 à 30 minutes.

Le gel est ensuite soutiré du réacteur et disposé sur les plateaux d'une étuve qui ont été préalablement pesés et enfournés dans l'étuve. On pèse régulièrement les plateaux pour assurer le suivi de la perte de masse afin d'atteindre la teneur en eau résiduelle désirée.

La durée du séchage est d'autant plus rapide que le gel est plus concentré et l'épaisseur plus faible. Lorsque la consistance du produit le permet, on retourne la masse séchée en cours de séchage de manière à éviter la formation de croûtes qui réduisent l'évacuation de l'eau.

Tous les lots ont été broyés à 2mm. Seul un lot a été tamisé.

Trois lots ont été préparés à trois concentrations différentes en farine de blé. On emploie respectivement 15, 25 et 30 % de farine. On constate des variations importantes de viscosité entre les différents produits soit en raison de la teneur en protéines soit en raison du traitement thermique. En effet pour amener la suspension et le réacteur à 80° C la durée du chauffage est relativement longue (2 heures environ). Cependant la cinétique d'hydrolyse des polysaccharides étant lente surtout en présence d'un agent réticulant, il est probable que le facteur prépondérant dans les caractéristiques de viscosité soit la nature de la farine.

Deux lots contiennent les mêmes additifs (formol à 0,15 g/Kg de farine, soude 0,4 g/Kg de farine). Pour un autre lot on a utilisé l'anhydride maléique (0,4 g/Kg de farine, en présence de soude 0,4 g/Kg de farine).

Deux lots contiennent un biocide (N₃ Na) à 0,01 g/Kg.

Après séchage les résultats obtenus ont été les suivants :

Les teneurs en humidité restent variables.
Aw = détermination de l'activité de l'eau.

| ESSAI | HUMIDITE (%) | DURETE Shore D | 0 (DURETE)* | Aw |
|---|---|---|---|---|
| 1 | 22 | 73 | 4,13 | 0,458 |
| 2 | 17 | 66,3 | 4,32 | 0,491 |
| 3 | 20,8 | 73 | 4,15 | 0,543 |
| 4 | 21,2 | 56 | 6,2 | 0,339 |
| 5 | 16.7 | 73,5 | 4,96 | 0,537 |
| 6 | 16,4 | 68,4 | 5,06 | 0,475 |
| 7 | 17,2 | 70,8 | 6,12 | 0,562 |
| 8 | 16 | 77 | 5,2 | 0,596 |
| 9 | 18,3 | 76 | 4,3 | 0,521 |

### EXEMPLE II

### Préparation du produit biologique par extrusion et gélatinisation

Le produit souhaité a été obtenu sans difficultés. La farine de blé a été extrudée, gélatinisée sous forme de fils de ∅ 2,5 mm, non expansés et ensuite granulée. Les pellets sous forme de billes ont été ensuite séchés, bravés et tamisés.

Une qualité constante identique à l'échantillon a été obtenue sur 4 lots industriels avec les paramètres suivants :
- L'humidité en sortie du séchoir doit se situer à 15 % environ.
- Les pellets doivent subir un tempérage de plusieurs heures (14 heures pendant les essais) pour que l'humidité s'homogénéise.
   L'homogénéité de l'humidité et la stabilisation du produit ont une grosse influence sur la dureté et sur la structure du produit fini.
- Les deux conditions étant remplies, le broyage se déroule sans problème avec un débit optimal.

L'humidité de 15 % environ a été obtenue en trois phases de séchage :
- Un passage de préséchage dans OTW-150 à 70°-90° C.
- Deux passages de séchage - refroidissement dans DNTW à 90° - 100° C.

Il n'est pas possible de sécher les pellets avec une température supérieure à 100° C puisque au-delà de 100° C commence une légère expansion du produit.

### Machines et paramètres techniques

Extrudeur type DNDG-20 D avec dégazage sur le 4ème élément
- Filière avec 60 trous ⌀ 2 mm concentriques.
- Granulateur avec couteau à 2 lames.
- Débit max. 175 kg/h.

Paramètres d'extrusion pour les quatre principaux essais
- Humidité matière première : 13,7 %
- Humidité produit fini (échantillon) : 12,5 %

### EXEMPLE III

### Etude rhéologique des gels selon l'invention

### 1 - Influence des additifs

### a - Choix de l'additif de gélatinisation :

Comme il ressort de la littérature, l'agent réticulant est souvent associé à une base qui joue le rôle d'initiateur de la réticulation. L'influence de cet ajout sur le comportement rhéologique a été étudié. La viscosité est mesurée à l'aide d'un viscosimètre Rhéomat Mettler RM 180.

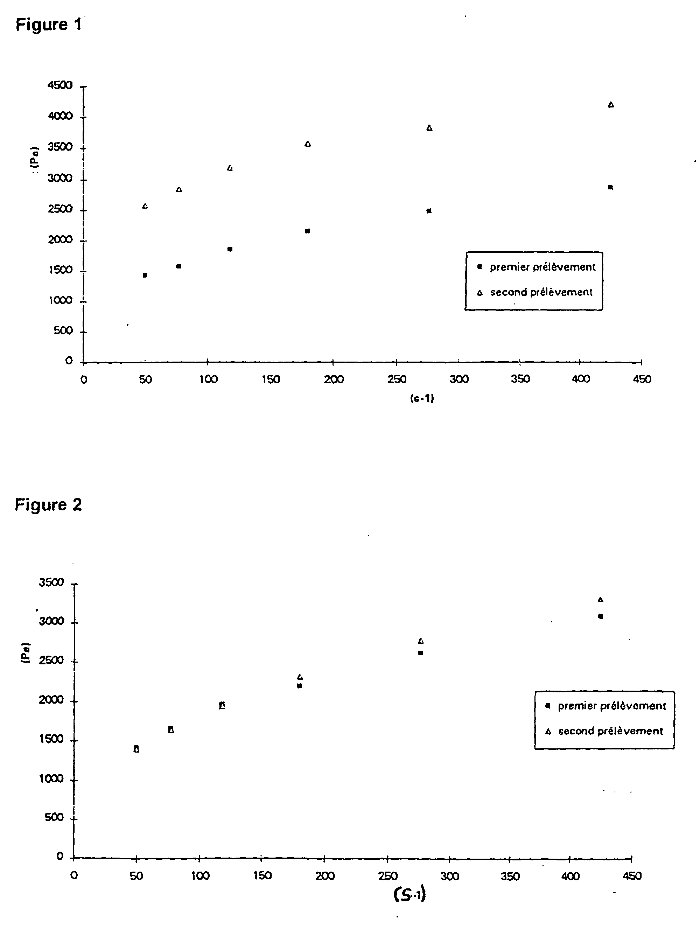

Dans un premier temps, on a réalisé la mesure sur un « blanc » (appelé gel --), c'est-à-dire une suspension de gel d'amidon à 15 % sans additif, chauffée à 80° C selon le mode opératoire décrit précédemment. Les rhéogrammes obtenus (figures 1 et 2) correspondent à deux prélèvements : le premier à t₀, c'est-à-dire à l'instant auquel le gel atteint 80° C, et le second à t ₀₊₁₅ minutes. Le rhéogramme obtenu montre que le gel d'amidon est un fluide non Newtonien à contrainte seuil (annexe I-1) dont l'ordre de grandeur est de 1 000 Pa.

Le second essai a été réalisé avec de la soude pour seul additif (gel S-) dans les mêmes conditions opératoires.

Le comportement rhéologique du gel évolue au cours du temps (traitement thermique prolongé) comme il est exposé dans la littérature. La première période de cuisson correspond à un pic de viscosité (gélatinisation) qui est suivie d'une chute progressive due à l'hydrolyse partielle de l'amidon.

### b - Influence de la soude

On a également étudié l'influence de l'ajout de soude en présence de réticulant (celui qui est le plus couramment cité : l'épichlorhydrine). On observe que la soude catalyse la réaction, car la contrainte de cisaillement du gel SE (soude - épichlorhydrine) est légèrement plus forte (ces résultats sont cohérents avec ceux de la littérature).

La figure 1 fournit les détails de l'évolution du comportement rhéologique du gel SE en fonction des contraintes de cisaillement en Pa et du taux de cisaillement en s⁻¹ pour deux prélèvements successifs.

Les courbes montrent bien que ce phénomène est accéléré en présence de soude puisque la viscosité augmente déjà au bout de 15 minutes (apparition du pic) alors qu'elle est stationnaire pour le gel--. En effet, la soude apporte des ions hydroxyle dans le milieu. Ceux-ci pénètrent dans le réseau cristallin où ils établissent des liaisons hydrogène avec la molécule d'amidon, en remplaçant les liaisons amidon-amidon, ce qui accélère la dissolution.

La figure 2 fournit les détails de l'évolution du comportement rhéologique du gel- en fonction des contraintes de cisaillement en Pa et du taux de cisaillement en s⁻¹ pour deux prélèvements.

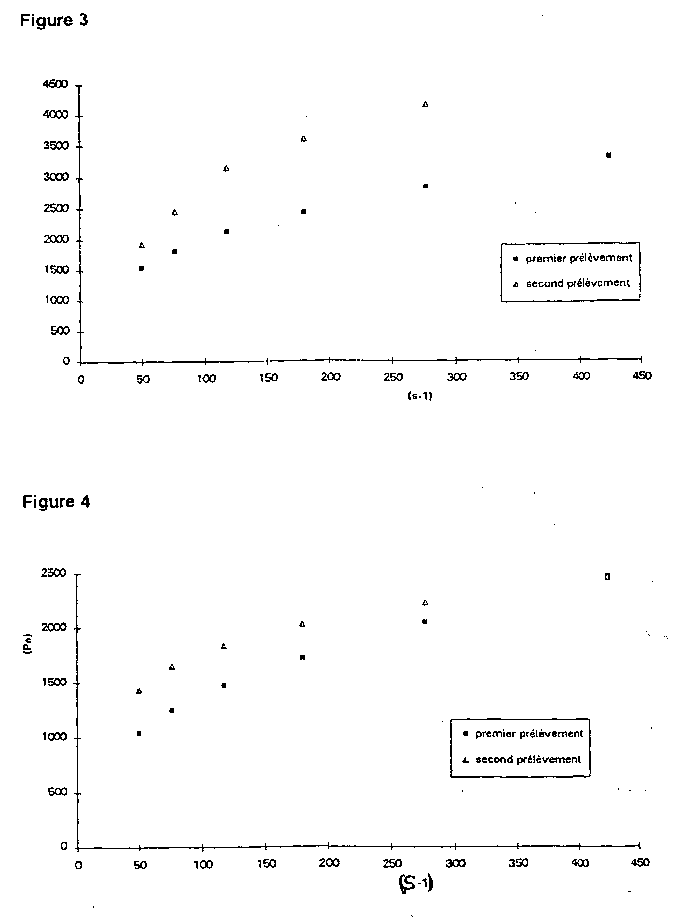

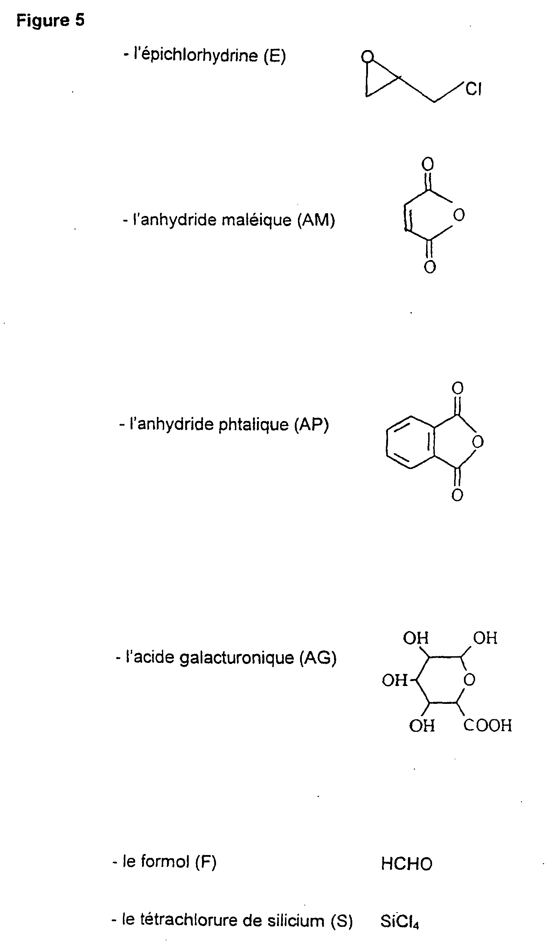

La figure 3 fournit les détails de l'évolution du comportement rhéologique du gel S-dans les mêmes conditions.

La figure 4 fournit les détails de l'évolution sur le comportement rhéologique du gel - E en fonction de la contrainte en s⁻¹ sur deux prélèvements successifs.

### c - Choix du réticulant :

L'agent réticulant permet de créer des ponts entre les chaînes d'amidon par des liaisons covalentes (plus fortes que les liaisons hydrogène), ce qui permet de mieux structurer le gel et d'augmenter sa résistance à un traitement thermique prolongé. Sachant que la réticulation est caractérisée par une augmentation de la viscosité du gel par rapport au « blanc », on a testé différents réticulants autres que l'épichlorhydrine.

Les gels ont été préparés dans les mêmes conditions que précédemment, avec 0,4 g de soude par kg de farine et 0,4 g de réticulant / kg de farine (et à 0,15 g/kg pour le formol).

Les composés testés figurent sur la planche 5 ci-après.

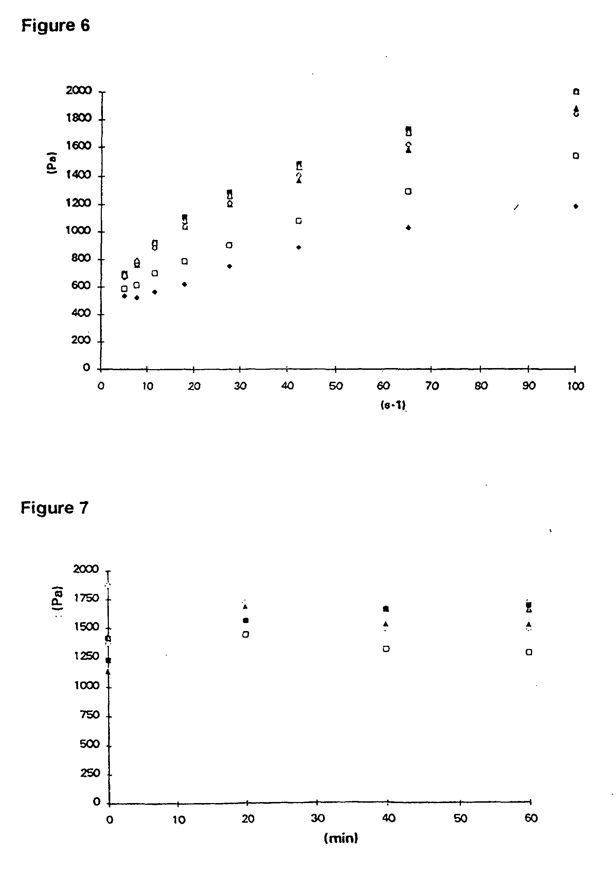

Les rhéogrammes obtenus avec les différents gels sont représentés aux figures 6 et 7.
La figure 6 fournit des informations sur le comportement de différents gel formés par action de différents agents réticulants
= gel SAM
= gel SAP
= -----
= gel SE
= gel SF
= gel SAG
en fonction de la contrainte de cisaillement en Pa et du taux de cisaillement en s⁻¹.
Les réticulants efficaces augmentant la viscosité, sont donc surtout l'anhydride maléique et le formol.

D'autres essais ont été effectués sur les effets de différents additifs (combinés ou non), ainsi que sur l'influence de la concentration en réticulant mais avec une matière première d'origine différente.
La figure 7 fournit des indications sur le suivi rhéologique de différents gels à un taux de cisaillement = 100 s⁻¹ en fonction du temps exprimé en minute pour les différents types de gel :
= gel -
= gel F
= gel S
et les différents gels SF

Ces courbes confirment les observations précédentes. L'ajout de soude accélère la gélatinisation et l'hydrolyse. La consistance du gel réticulé par le formol est plus faible que celle du gel--, mais l'ordre est inversé au bout d'environ trente minutes. En effet, la contrainte de cisaillement du gel-- témoin décroît, alors que celle du gel au formol augmente pour atteindre son maximum au bout de quarante minutes (amorce de l'hydrolyse à soixante minutes). Ce résultat peut varier en fonction de la nature de la matière première.

On observe l'effet stabilisant de la réticulation (gels SF) qui offre une résistance au traitement thermique prolongé. Il est intéressant d'étudier l'influence de la concentration en agent réticulant : d'une manière générale, lorsque celle-ci augmente, la viscosité du gel diminue. Bien que surprenant, ce résultat confirme les données bibliographiques.

### 2 - Phénomène de maturation

Lorsque la farine subit un traitement hydrothermique, elle passe successivement par différents états, décrits dans la littérature :
- la gélatinisation : c'est un gonflement des granules qui adhèrent les uns aux autres. Ce phénomène se traduit par une augmentation de la viscosité de la suspension.
- l'hydrolyse : si le traitement thermique est prolongé, les granules éclatent, ce qui correspond à une hydrolyse partielle des molécules d'amidon. Elle se manifeste par une chute de la viscosité.

On a donc effectué un suivi rhéologique de la suspension (gel SE à 15 %) dans les conditions d'un traitement thermique prolongé afin de déterminer les durées de chacune de ces phases.

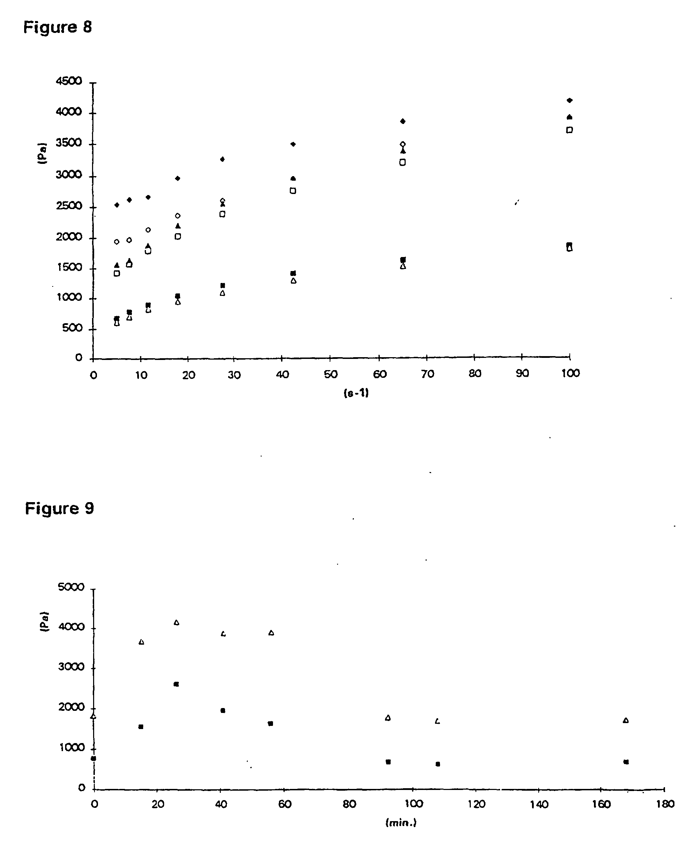

La figure 8 fournit les détails de l'évolution du comportement rhéologique du gel SF au cours d'un traitement thermique prolongé (à 80° C) en fonction de la contrainte de cisaillement en Pa et du gradient exprimé en s⁻¹

A l'aide de ces rhéogrammes, on peut représenter l'évolution des contraintes de cisaillement minimale et maximale avec le temps.

La figure 9 schématise l'évolution de la contrainte de cisaillement du gel SF exprimé en min.

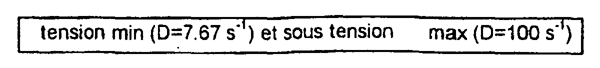

La présente présentation des résultats met clairement en évidence les deux étapes. La contrainte augmente pendant les vingt-six premières minutes pour ensuite chuter progressivement et atteindre un palier au bout d'environ quatre-vingt dix minutes.

## Revendications

1. Produits biologiques présentant une structure vitreuse, résultant de la polymérisation et de la réticulation de farines de céréales en milieu alcalin à l'aide d'un agent réticulant bifonctionnel, présentant une granulométrie variant de 0,120 à 1,8 mm, une (MS) variant de 0,75 à 0,85 et une dureté Shore de 70 à 85.

2. Produits biologiques selon la revendication 1 dans lesquels la farine de céréales est une farine de blé.

3. Produits biologiques selon la revendication 1 dans laquelle la farine de céréales est une farine de blé fourrager.

4. Produits biologiques selon la revendication 1 dans laquelle la farine de céréales est une farine d'épeautre.

5. Produits biologiques selon l'une des revendications 1 à 4 dans lesquels l'agent réticulant est le formaldéhyde libre, combiné chimiquement ou polymérisé.

6. Produits biologiques selon l'une des revendications 1 à 4 dans lesquels l'agent réticulant est l'anhydride maléique.

7. Procédé d'obtention des produits biologiques selon l'une des revendications 1 à 6 qui consiste à disperser la farine de céréales dans un véhicule aqueux à température ordinaire, à former par cuisson un gel élaboré à partir de la farine de céréales, d'un agent basique et d'un agent de réticulation bifonctionnel choisi dans le groupe formé du formaldéhyde, et de l'anhydride maléique, puis à faire subir à ce gel une maturation supplémentaire à une température comprise entre 80 et 100° pour obtenir par déshydratation une structure solide, présentant un caractère vitreux et une teneur en eau déterminée et ensuite le broyer en grains translucides durs, légèrement colorés, de granulométrie homogène.

8. Procédé selon la revendication 7 dans lequel l'agent basique est un hydroxyde de métal alcalin.

9. Procédé selon la revendication 7 et la revendication 8 dans lequel l'agent basique est l'hydroxyde de sodium.

10. Procédé selon la revendication 7 et la revendication 8 dans lequel l'agent de formolation est une solution de formaldéhyde.

11. Procédé selon la revendication 10 dans lequel le formaldéhyde est introduit à une concentration s'échelonnant entre 0,1 et 0,3 g par Kg de farine.

12. Procédé selon la revendication 7 dans lequel l'anhydride maléique est introduit à une concentration allant de 0,3 à 0,6 g/Kg.

13. Procédé selon la revendication 7 dans lequel la phase de maturation dure 14 heures environ.

14. Procédé selon l'une des revendications 7 à 13 dans lequel la réaction de réticulation est effectuée à une température comprise entre 60 et 100° C pendant une durée s'échelonnant entre 15 et 30 mn.

15. Procédé selon l'une des revendications 8 à 14 dans lequel on procède au séchage supplémentaire à une température d'au moins 70 à 75° en s'aidant en outre d'un chauffage par un autre four.

16. Procédé selon la revendication 15 dans lequel le produit résumant du séchage supplémentaire présente un degré de siccité compris entre 75 et 85 % de matière sèche.

17. Procédé selon la revendication 16 dans lequel le produit résultant du séchage supplémentaire présente un degré de siccité allant de 78 à 82 % de matière sèche.

18. Procédé selon les revendications 15 à 17 dans lequel le produit résultant du séchage supplémentaire présente une dureté Mohs s'échelonnant en fonction de la matière première, de 2 à 4 Mohs.

19. Procédé selon l'une des revendications 7 à 18 dans lequel le produit déshydraté est soumis à un broyage puis à un tamisage pour obtenir un produit dont le seuil de refus au tamis se situe entre 0,2 et 0,25 mm.

20. Utilisation des produits biologiques selon l'une des revendications 1 à 4 comme agent de décapage soit à sec soit en suspension dans un milieu gazeux.

21. Utilisation des produits biologiques selon la revendication 20 dans laquelle le décapage est opéré par pulvérisation ou par projection du produit décapant.

22. Utilisation des produits biologiques selon la revendication 20 ou la revendication 21 comme agent de décapage sélectif des tôles d'avions ou de voitures.

23. Utilisation des produits biologiques selon la revendication 20 ou la revendication 21 comme agent de décapage des matériaux composites ou métalliques peints ou laqués.

24. Utilisation des produits biologiques selon la revendication 20 ou la revendication 21 comme agent de décapage pour façades d'immeubles, monuments historiques ou monuments religieux.

25. Utilisation des produits biologiques selon la revendication 20 d'un agent biologique comme agent de décapage pour sols et pour parois.

26. Utilisation des produits biologiques selon la revendication 1, présentant une granulométrie de l'ordre de 100 à 200 nm en vue de la dermabrasion.

## Patentansprüche

1. Biologische Produkte von glasartiger Struktur, resultierend aus der Polymerisation und Vernetzung von Getreidemehlen in alkalischer Umgebung mit Hilfe eines bifunktionellen Vernetzungsmittels, mit einer Körnung zwischen 0,120 und 1,8 mm, einer Trockensubstanz zwischen 0,75 und 0,85 und einer Härte von 70 bis 85 Shore.

2. Biologische Produkte nach Anspruch 1, wobei das Getreidemehl Weizenmehl ist.

3. Biologische Produkte nach Anspruch 1, wobei das Getreidemehl Futterweizen ist.

4. Biologische Produkte nach Anspruch 1, wobei das Getreidemehl ein Dinkelmehl ist.

5. Biologische Produkte nach einem der Ansprüche 1 bis 4, wobei das Vernetzungsmittel freies Formaldehyd , chemisch gebundenes oder polymerisiertes Formaldehyd ist.

6. Biologische Produkte nach einem der Ansprüche 1 bis 4, wobei das Vernetzungsmittel ein Maleinanhydrid ist.

7. Verfahren zum Herstellen von biologischen Produkten nach einem der Ansprüche 1 bis 4, das darin besteht, das Getreidemehl in einer wässrigen Umgebung bei normaler Temperatur zu dispergieren, durch Kochen ein Gel zu bilden, hergestellt aus Getreidemehl, einem basischen Wirkstoff und einem bifunktionalen Vernetzungsmittel, ausgewählt aus der Gruppe, gebildet aus Formaldehyd und Maleinanhydrid, worauf das Gel einer zusätzlichen Reifung bei einer Temperatur zwischen 80 und 100°C unterworfen wird, um durch Entwässerung einen festen Zustand zu erzielen, der einen glasartigen Charakter und einen bestimmten Wassergehalt aufweist, worauf es in harte, durchscheinende Körner zerkleinert wird, die leicht gefärbt und von gleichförmiger Körnung sind.

8. Verfahren nach Anspruch 7, wobei der basische Wirkstoff ein Alkalimetall Hydroxid ist.

9. Verfahren nach den Ansprüchen 7 und 8, wobei der basische Wirkstoff Natrium Hydroxid ist.

10. Verfahren nach den Ansprüchen 7 und 8, wobei der Formolierungswirkstoff eine Formaldehydlösung ist.

11. Verfahren nach Anspruch 10, wobei das Formaldehyd in einer Konzentration eingeführt wird, die zwischen 0,1 und 0,3 g pro kg Mehl liegt.

12. Verfahren nach Anspruch 7, wobei das Maleinanhydrid bei einer Konzentration zwischen 0,3 und 0,6 g/kg eingeführt wird.

13. Verfahren nach Anspruch 7, wobei die Reifungsphase etwa 14 Stunden dauert.

14. Verfahren nach einem der Ansprüche 7 bis 13, wobei die Reaktion der Vernetzung bei einer Temperatur zwischen 60 und 100°C und einer Dauer zwischen 15 und 30 mn durchgeführt wird.

15. Verfahren nach einem der Ansprüche 7 bis 14, wobei eine zusätzliche Trocknung bei einer Temperatur von wenigstens 70 bis 75 Grad C durchgeführt wird, die außerden durch eine Erwärmung durch einem weiteren Ofen stattfindet.

16. Verfahren nach Anspruch 15, wobei das Produkt der zusätzlichen Trocknung einen Trockengehalt von zwischen 75 und 85 % aufweist.

17. Verfahren nach Anspruch 16, wobei das aus der zusätzlichen Trocknung hervorgehende Produkt einen Trockengehalt von 78 bis 82 % aufweist.

18. Verfahren nach Anspruch 15, wobei das aus der zusätzlichen Trocknung hervorgehende Produkt je nach des Ausgangsmaterial eine Härte von 2 bis 4 Mohs aufweist.

19. Verfahren nach einem der Ansprüche 7 bis 15, wobei das getrocknete Produkt einer Zerkleinerung unterworfen wird und sodann einer Sichtung, um ein Produkt zu erzielen, dessen Rückhaltung am Sieb zwischen 0,2 und 0,25 mm liegt.

20. Anwendung biologischer Produkte nach einem der Ansprüche 1 bis 4 als abrasives Mittel in trockenem Zustand oder in Suspension oder in einem gasförmigen Medium.

21. Anwendung biologischer Produkte nach Anspruch 20, wobei der Abrasionsvorgang durch Pulverisierung oder durch Aufstrahlen des abrasiven Produktes durchgeführt wird.

22. Anwendung biologischer Produkte nach Anspruch 20 oder 21 als selektives Schleifmittel für Flugzeug- oder Autoblech.

23. Anwendung biologischer Produkte nach Anspruch 20 oder 21 als abrasives Mittel für Verbundmaterialien oder Metalle oder Farben oder Lacke.

24. Anwendung biologischer Produkte nach Anspruch 20 oder 21 als abrasives Mittel für Möbelflächen für historische oder religiöse Denkmäler.

25. Anwendung biologischer Produkte nach Anspruch 20 eines biologisches Mittel, als Schleifmittel für Böden oder Wänden.

26. Anwendung biologischer Produkte nach Anspruch 1, mit einer Körnung in der Größenordnung von 100 bis 200 nm für die Hautabschabung.

## Claims

1. Biological products having a vitreous structure, obtained as a result of polymerising and cross-linking cereal flours in alkaline medium, by means of a bifunctionnal cross-linking agent showing a granulometry ranging from 0,120 to 1,8 mm, having a dry matter content ranging from 0,75 to 0,85 and a Shore hardness ranging from 70 to 85.

2. Biological products according to claim 1, wherein the cereal flour is a wheat flour.

3. Biological products according to claim 1 wherein the cereal flour is a flour of food wheat

4. Biological products according to claim 1 wherein the cereal flour is a spelt wheat flour.

5. Biological products according to one of claims 1 to 4 wherein the cross linking agent is formaldehyde in the free form, or chemically combined or in a polymerised form.

6. Biological products according to one of the claims 1 to 4 wherein the cross-linking agent is maleic anhydride.

7. Process for producing the biological products according to one of the claims 1 to 4 which consist in dispersing the cereal flour in an aqueous vehicle at room temperature, in forming by cooking a gel made from the cereal flour, a basic agent and a bifunctionnal cross linking agent selected from the group made of formaldehyde and maleic anhydride, then in submitting this gel to an additional ageing at a temperature comprised between 80 and 100°C, to obtain by dehydrating, a solid structure having a vitreous character and a well defined water-content, and further in grinding it in translucent grains which are slightly coloured and have a homogeneous particle size distribution.

8. A process in accordance to claim 7, wherein the basic agent is an alkali metal hydroxide.

9. A process according to claim 7, and to claim 8, wherein the basic agent is sodium hydroxide.

10. A process according to claim 7 and to claim 8, wherein the formolating agent is a solution of formaldehyde.

11. A process according to claim 10, wherein formaldehyde is incorporated in an amount of between 0,1 and 0,3 g per Kg of flour.

12. A process according to claim 7 wherein maleic anhydride is incorporated in an amount of 0,3 to 0,6g/Kg.

13. A process according to claim 7 wherein the ageing step lasts about 14 hours.

14. A process according to any of claims 7 to 13 wherein the cross-linking step is performed at a temperature comprised between 60 and 100°C during a set of time ranging between 15 and 30 min.

15. .A process according to any claim of the claims 7 to 14 wherein the supplemental drying step is performed at a temperature of at least of 70-75° C with the further help of the heating by another oven.

16. A process according to claim 15 wherein the product obtained as the result of additional drying shows a dry ness stage comprised between 75 and 85% of dry matter.

17. A process according to claim 16 wherein the product obtained as the result of additional drying shows a dryness stases ranging from 78 to 82 % of dry matter.

18. A process according to claim 15 wherein the product obtained as the result of the additional drying shows a hardness Mohs ranging, as a function of the raw material, from 2 to 4 Mohs.

19. A process according to any of the claims 7 to 15 wherein the dehydrated product is submitted successively to a grinding then to a sieving, to obtain a product for which the sieve cut off lies between 0,2 and 0,25 mm.

20. Use of biological products according to any claim 1 to 4, as a blast remover either in the dry state or in suspension in a gaseous medium.

21. Use of biological products according to claim 20, wherein removing is performed by spraying or projection the blasting.

22. Use of the biological products according to claim 20, or claim 21 as selective removing agent for air-craft or car metal sheets.

23. Use of the biological products according to claim 20 or claim 21 as removing agent for composite or metallic materials which are painted or varnished.

24. Use of the biological compounds according to claim 20 or claim 21, as removing agent for the building exteriors, historical monuments or religious monuments.

25. Use of the biological products according to claim 20, as removing agent for floors and for walls.

26. Use of biological products according to claim 1 showing a particle size of the order of 100 to 200 nm intended for the dermabrasion.
